# EUROPÄISCHE PATENTSCHRIFT

(11) **EP 2 517 297 B1**
(45) Veröffentlichungstag und Bekanntmachung des Hinweises auf die Patenterteilung: **13.08.2014**
(21) Anmeldenummer: 10776343.5
(22) Anmeldetag: 08.11.2010
(51) Int. Cl.: H01M 6/00, H01M 4/13, H01M 4/139, H01M 10/052, H01M 4/131, H01M 4/1391, H01M 10/0525, H01M 4/02

(54) **LITHIUMZELLE MIT VERBESSERTER KATHODENSTRUKTUR UND HERSTELLUNGSVERFAHREN HIERFÜR**
LITHIUM CELL HAVING IMPROVED CATHODE STRUCTURE AND PRODUCTION METHOD THEREFOR
PILE AU LITHIUM PRÉSENTANT UNE STRUCTURE DE CATHODE AMÉLIORÉE ET PROCÉDÉ DE FABRICATION ASSOCIÉ

(30) Priorität: 05.02.2010 DE 102010001632; 23.12.2009 DE 102009055223
(43) Veröffentlichungstag der Anmeldung: 31.10.2012
(73) Patentinhaber: Robert Bosch GmbH, 70442 Stuttgart (DE)
(72) Erfinder: SCHWEGLER, Leonore, 70374 Stuttgart (DE); EISELE, Ulrich, 70199 Stuttgart (DE)
(86) Internationale Anmeldenummer: PCT/EP2010/066963
(87) Internationale Veröffentlichungsnummer: WO 2011/076475

(56) Entgegenhaltungen:
- EP-A1- 1 662 592
- EP-A1- 1 926 164
- WO-A2-2006/050022
- WO-A2-2008/120162
- DE-A1-102007 030 604
- US-A1- 2009 214 944
- US-B1- 6 770 353

## Beschreibung

### Technisches Gebiet

Die Erfindung betrifft das technische Gebiet der elektrischen Akkumulatoren, wie sie insbesondere mit hoher Leistungsdichte und hoher Energiedichte für elektrisch betriebene Fahrzeuge wie Hybridfahrzeuge oder Elektrofahrzeuge verwendet werden. Insbesondere betrifft die Erfindung eine Lithiumzelle, bei der die Kathodenstruktur durch geeignete Anordnung des aktiven Materials auf einem erfindungsgemäßen Träger eine besonders hohe Zyklenfestigkeit und mechanische Stabilität vorsieht.

### Stand der Technik

Li-Ionen-Batterien sind aus zahlreichen Anwendungen bekannt, insbesondere der mobilen Kommunikation, Unterhaltungselektronik oder für Traktionsbatterien elektrisch betriebener Fahrzeuge. Es ist bekannt, dass insbesondere Li-lonen-Batterien eine hohe Energiespeicherungskapazität mit ca. 100 Wh/kg aufweisen. Für Hochenergieanwendungen, beispielsweise als Traktionsenergiespeicher für elektrisch betriebene Fahrzeuge sind Li-Ionen-Batterien trotz ihrer hohen Energiespeicherungskapazität mit schweren Vorrichtungen verknüpft. Um beispielsweise eine Reichweite von typischerweise 400 km zu erreichen, beträgt das Batteriegewicht ca. 600 kg.

Aus diesem Grund werden beispielsweise bereits Lithium-Schwefelbatterien im Labormaßstab hergestellt, die eine Energiedichte von 600 Wh/kg und mehr versprechen.

Jedoch weisen bereits bekannte Lithium/Schwefel-Systeme eine geringe Zyklenfestigkeit aufgrund der starken strukturellen Veränderungen während des Be-und Entladens solcher Systeme auf. Insbesondere die Neuanordnung und die Kornvergröberung von granularem Kohlenstoff/Schwefelverbund aufgrund der Phasentransformation/Neubildung der Schwefelkomponente führt zu einem starken Verlust an Kapazität und Energieabgabe-Leistungsfähigkeit derartiger Systeme.

Ferner tritt bei bekannten Systemen Korrosion der Lithiummetallanode auf aufgrund der Reaktion mit dem Elektrolyten, mit dem Lösungsmittel bzw. mit den Polysulfiden. Eine stabilere Graphitinterkalationsanode ist jedoch verknüpft mit einer zusätzlich verringerten Zellspannung, die ohnehin schon relativ gering ist.

US2009/214944 (Rojeski) veröffentlicht eine Lithiumzelle mit einer Elektrodenstruktur, der eine durchgehende Trägerschicht umfasst, von der sich eine Vielzahl von Stegen erstreckt, von denen ausgehend sich Strukturen erstrecken.

Darüber hinaus wurde noch kein Herstellungsverfahren vorgesehen, mit dem sich stabile und leistungsfähige Lithium-basierte Akkumulatoren kostengünstig und auf einfache Weise herstellen lassen.

Es ist daher eine Aufgabe der Erfindung, eine verbesserte Lithium-basierte Zelle vorzusehen, die insbesondere eine höhere Zyklenfestigkeit bei hoher elektrischer Leistungsfähig erlaubt, die sich auf einfache Weise herstellen lässt.

### Offenbarung der Erfindung

Diese Aufgabe wird gelöst durch die Verfahren und die Vorrichtungen der unabhängigen Ansprüche.

Die erfindungsgemäße Lithiumzelle ermöglicht eine besonders hohe Leistungsdichte bei gleichzeitig hoher Zyklenfestigkeit und hoher Energiedichte. Die erfindungsgemäße Vorrichtung lässt sich kostengünstig und energieeffizient herstellen, das zugehörige Herstellungsverfahren basiert auf einfachen Herstellungsprozessen, die sich mit weit verbreiteten Werkzeugen durchführen lassen. Insbesondere können die Eigenschaften, insbesondere die Struktureigenschaften der Lithiumzelle durch präzise zu steuernde Betriebsparameter der Herstellungswerkzeuge genau vorherbestimmt werden. Nach ersten Abschätzungen können mit der erfindungsgemäßen Lithiumzelle Energiedichten von ungefähr 600 Wh/kg realisiert werden. Insbesondere kann die Lithiumzelle hergestellt werden mittels kontinuierlicher Schichtverfahren, so dass sich mit einfachen Mitteln hohe Stückzahlen erreichen lassen.

Die erfindungsgemäße Lithiumzelle weist eine Kathodenstruktur aus einem Trägermaterial auf, das sowohl für Elektronen leitend ist als auch für Li-Ionen leitend ist. Das Trägermaterial kann ebenso von einer hierzu äquivalenten Trägerstruktur vorgesehen sein aus einem für Li-Ionen nicht leitendem Material, das elektrisch leitet, wobei die Trägerstruktur ein Flüssigelektrolyt umfasst, das zwischen dem für Li-Ionen nicht leitendem Material vorgesehen ist und das Li-Ionen leitet. Das elektrisch leitende Material kann hierbei ein Metall, eine Legierung oder ein andere elektrische leitendes Material sein, das sich in Partikelform Gefriergießen lässt und Sintern lässt.

Die stabile Kathodenstruktur, welche eine hohe spezifische Fläche ermöglicht, wird vorgesehen durch eine durchgehende Trägerschicht, welche eine Grundfläche bildet. Von dieser Grundfläche der Trägerschicht ausgehend erstreckt sich eine Vielzahl von Stegen, vorzugsweise im Wesentlichen senkrecht zur Grundfläche bzw. an den Stellen, an denen die Stege auf die Trägerschicht stoßen. Mit diesen Stegen wird der Raum über der Trägerschicht zunächst aufgefächert, insbesondere in eine Richtung senkrecht zur Grundfläche. Die Stege selbst sehen Stegflächen vor, die vorzugsweise im Wesentlichen parallel zueinander sind, wobei die Stege in einer Lamellenform ausgebildet sind und sich durchgängig in eine Richtung parallel zur Grundfläche erstrecken. Zusätzlich wird der Raum über der Grundfläche in eine weitere Richtung aufgefächert, indem sich Tragestrukturen ausgehend von den Stegflächen erstrecken, um den Raum zwischen den Stegflächen mit den Tragestrukturen zu durchsetzen. Durch diese Tragestrukturen wird der Raum in eine weitere Richtung aufgefächert. Es ergibt sich daher eine Vielzahl von Ebenen in einer Richtung parallel zur Grundfläche durch die Vielzahl von Stegen bzw. deren Stegflächen und eine weitere Vielzahl von Ebenen durch die Tragestrukturen in einer Richtung senkrecht zur Grundfläche, da sich die Tragestrukturen von den Stegflächen weg erstrecken. Insbesondere erstrecken sich die Tragestrukturen im Wesentlichen senkrecht von den Stegflächen. Damit durchdringen die Tragestrukturen den Raum über der Grundfläche in mehreren Dimensionen, so dass die Trageflächen eine sehr hohe spezifische Oberfläche vorsehen. Auf den Trageflächen ist aktives Material verteilt bzw. angeordnet, um beispielsweise als reaktives oder katalytisches Material zu wirken.

Da die Kathodenstruktur, d. h. die Trägerschicht, die Stege und die Tragestrukturen aus elektrisch leitendem und Li-Ionen-leitendem Trägermaterial vorgesehen sind, erlaubt die erfindungsgemäße Kathodenstruktur eine Elektrodenleitung sowie eine Li-Ionen-Leitung von den fein verteilten Trageflächen zu der durchgehenden Trägerschicht, wobei die Stege und die Tragestrukturen eine optimale räumliche Auffächerung der Trageflächen vorsehen, so dass das aktive Material mit einer optimalen spezifischen Oberfläche verteilt werden kann und gleichzeitig Ionen leitend und Elektronen leitend mit der durchgehenden Trägerschicht verbunden ist. Durch die Aufteilung des Raums über der Grundfläche durch die Stege in einer ersten Richtung und durch die Tragestrukturen, die sich von den Stegen erstrecken, in eine andere Richtung, können gezielt stabile Kathodenstrukturen erzeugt werden, die gleichzeitig eine sehr hohe Raumdurchsetzung haben. Die Zweiteiligkeit (Stege/Tragestrukturen) ermöglicht ferner eine präzise Anpassung der gewünschten Eigenschaften während des Herstellungsprozesses, insbesondere da zwei unterschiedliche, aufeinander folgende Herstellungsprozesse für die Tragestrukturen und für die Stege vorgesehen werden können. Die Steuerung der Gesamtstruktureigenschaften wird auch dadurch erleichtert, dass zuerst die Stege und darauf folgend die Tragestrukturen in zwei getrennten Prozessen erzeugt werden, die voneinander unabhängig die Struktureigenschaften der Stege und die Struktureigenschaften der Tragestrukturen definieren.

Bevorzugt werden die Stege und die darauf angeordneten Tragestrukturen jeweils durch Abscheidungsprozesse erzeugt, die dennoch eine Stoffschlüssigkeit zwischen den Tragestrukturen und den Stegen und zwischen den Stegen und der Trägerschicht ermöglichen. Die stoffschlüssige Verbindung zwischen Grundfläche, Stegen und Tragestrukturen ermöglicht eine einfache Elektronen- und Io-nenleitung von dem aktiven Material zu der durchgehenden Trägerschicht. Insbesondere erstrecken sich die Stege senkrecht zu der Grundfläche der Trägerschicht, wobei die sich wiederum senkrecht von den Stegen bzw. von den Stegflächen erstreckenden Tragestrukturen sich im Wesentlichen in der gleichen Richtung erstrecken, entlang der sich auch die Grundfläche erstreckt. Da die Tragestrukturen jedoch vorzugsweise in kleineren Strukturen vorgesehen sind als die Stege, ist es ausreichend, wenn die Tragestrukturen nur ungefähr senkrecht zu den Stegflächen sind, vorzugsweise sich in einem Winkelbetragsbereich von ± 70°, ± 45° oder ± 30° von den Stegen erstrecken. Die Stege wiederum sind vorzugsweise parallel zueinander. Die Ausrichtungswinkel der Stege können auch streuen. Die Stege können zum einen im Wesentlichen senkrecht zu der Trägerschicht vorgesehen sein, sie können sich jedoch auch schräg zur Trägerschicht erstrecken, beispielsweise in einem Winkelbetragsbereich von ± 45° oder ± 30° zur Normalen der Grundfläche. Während die Winkelausrichtung der Stege und der Tragestrukturen sich in weiten Bereichen-bewegen kann, sind jedoch die Stege vorzugsweise alle zueinander im Wesentlichen parallel, wodurch automatisch die Verteilung der spezifischen Oberfläche innerhalb der Lithiumzelle homogen ist.

Gleiches gilt auch für die Verteilung der Tragestrukturen. Die Tragestrukturen benachbarter Stege sind zueinander gegenüberliegend angeordnet, jedoch nicht unmittelbar miteinander verbunden, um einen schmalen Zwischenraum zwischen den Stirnflächen der Tragestrukturen benachbarter Stege zu ermöglichen. Je nach Anwendungsbereich kann dieser Zwischenraum zur Zuführung bzw. Abführung von Reaktionsprodukten dienen oder zur Abfuhr von Reaktionsprodukten oder auch, um eine verbesserte Verteilung der spezifischen Oberfläche bzw. eine homogenere Verteilung des aktiven Materials zu ermöglichen.

Die Trägerschicht dient ferner zur Ableitung von Elektronen und umfasst einen elektrischen Kontakt, der den Kathodenanschluss der Lithiumzelle vorsieht. Da die Trägerschicht mit allen Stegen verbunden ist und ferner für Elektronen leitend ist, kann dieser elektrische Kontakt nur an einem Randbereich der Trägerschicht vorgesehen sein. Insbesondere kann der elektrische Kontakt unmittelbar an eine Stirnseite der durchgehenden Trägerschicht angebracht sein, zu der sich die Grundfläche im Wesentlichen senkrecht erstreckt. Auf diese Weise kann der Kathodenanschluss im Wesentlichen als letzter Herstellungsschritt der Lithiumzelle angebracht werden.

Eine weitere Ausführungsform sieht vor, dass zwischen benachbarten Stegen ein Leiterelement vorgesehen ist, um die elektrische Leitfähigkeit der Kathodenstruktur zu verbessern und um die Leitfähigkeit des Trägermaterials zu unterstützen. Insbesondere kann zwischen benachbarten Stegen ein Metallstreifen vorgesehen sein, der eine höhere spezifische Leitfähigkeit aufweist als das elektrisch leitende Trägermaterial, um die Stromableitung zu verbessern. Die Metallstreifen können auf der Grundfläche aufgedruckt sein. Bei einem entsprechenden Herstellungsverfahren ist vorgesehen, dass zunächst die Metallstreifen auf die Grundfläche aufgedruckt werden, und in einem nachfolgenden Schritt die Stege sowie die Tragestrukturen vorgesehen werden. Die Metallstreifen können aus je-dem beliebigen leitenden Material vorgesehen sein, insbesondere aus Metall (insbesondere Kupfer oder Aluminium), aus einer Legierung oder aus einem anderen elektrisch leitendem Material, das durch einen Sinterprozess und dessen Temperaturen nicht beeinträchtigt wird. Auf diese Weise kann das elektrisch leitende und Ionen leitende Trägermaterial, ein so genanntes gemischtes Leitermaterial, auch eine etwas geringere elektrische Leitfähigkeit aufweisen, wobei jedoch die elektrischen Verbindungselemente zwischen den Stegen die Stromableitung verbessern. Die elektrischen Verbindungselemente zwischen den Stegen können unmittelbar mit dem elektrischen Kontakt verbunden sein, der den Kathodenanschluss vorsieht. Im Allgemeinen ist zumindest ein Teil des Kathodenanschlusses der Lithiumzelle als ein durchgängiger Streifen vorgesehen, der sich an einer Kante bzw. an einem Rand der Lithiumzelle bzw. der Trägerschicht erstreckt.

Gemäß einer bevorzugten Ausführungsform der Lithiumzelle sind die Stege und die Trägerschicht als gefriergegossene Strukturen des Trägermaterials ausgebildet. Insbesondere sind die Strukturen und die Herstellungsverfahren hierfür geeignet, die in der deutschen Patentanmeldung der Anmelderin mit dem internen Zeichen R.330646 beschrieben sind.

Die Tragestrukturen, die sich von den Stegflächen weg erstrecken, sind vorzugsweise durch Abscheidung erzeugte Mikro- oder Nanostrukturen, insbesondere Nanodrähte, die aus dem Trägermaterial bestehen. Die Tragestrukturen sind vorzugsweise hydrothermisch oder per Gasphase synthetisierte Strukturen, die auf den Stegflächen wachsen. Falls nicht von den Stegen belegt, sind die Tragestrukturen auch auf der Grundfläche vorgesehen. Die Tragestrukturen können insbesondere aus vielfach gekrümmten Fasern dargestellt sein, die ein Textil bilden, insbesondere eine Vlies- oder Filzstruktur oder andere ungerichtete Fadenstrukturen. Im Gegensatz zur beispielsweise vielfach verschlungenen Mikrostruktur der Tragestrukturen erstrecken sich die Stege vorzugsweise in zueinander parallelen Ebenen. Die durchgehende Trägerschicht erstreckt sich ebenso vorzugsweise entlang einer Ebene. Schließlich können die Tragestrukturen nicht nur Nanodrähte, sondern auch Nanoröhren umfassen.

Das Material der Tragestrukturen und der Stege ist Li-Ionen und Elektronen leitendes Material in Form eines Mischleitermaterials. Das Trägermaterial weist ein Elektrodenpotential gegenüber Lithium von maximal 2,9 V oder maximal 2 V auf. Geeignet ist insbesondere Li-Ti-Oxid oder Li₄₋ₓMgₓTi₅O₁₂, mit 0 ≤x ≤ 2 oder 0 ≤ x ≤ 1, oder Li₄₋ₓMgₓTi_{5-y}(Nb, Ta)_{y}O₁₂, mit 0 ≤ x ≤ 2 oder 0 ≤ x ≤ 1 und 0 ≤ y ≤ 0,1 oder 0 ≤ y ≤ 0,05. Alternativ kann Li₂₋ₓMgₓTi_{3-y}(Nb, Ta)_{y}O₇ mit 0 ≤ x ≤ 1 oder 0 < x < 0,5 und 0 < y < 0,03 verwendet werden. Das aktive Material kann Schwefel bzw. können Schwefelpartikel sein. Ferner kann Katalysatormaterial eingerichtet zur Unterstützung von Li-O-Reaktionen als aktives Material verwendet werden, insbesondere α-MnO₂ oder nanokristallines α-MnO.

Die erfindungsgemäße Lithiumzelle umfasst ferner vorzugsweise eine Festelektrolytstruktur aus einem elektrisch isolierenden, Li-Ionen leitenden Material. Diese Festelektrolytstruktur bildet die Unterschicht der Trägerschicht, so dass die Trägerschicht unmittelbar auf der Festelektrolytstruktur angeordnet ist. Die Grundfläche, von der aus sich die Stege erstrecken, ist auf der entgegengesetzten Seite der Trägerschichtoberfläche, die unmittelbar auf der Festelektrolytstruktur angeordnet ist. Durch die Verwendung der durchgehenden Festelektrolytstruktur wird das elektrisch leitende und Ionen leitende Trägermaterial von weiteren Unterschichten getrennt, wodurch insbesondere ein elektrischer Kurzschluss vermieden wird, jedoch gleichzeitig ein Li-Ionen-Transport ermöglicht wird. Als Material für die Festelektrolytstruktur eignet sich gas- und wasserdichtes Material. Es eignet sich Granatkeramik, beispielsweise Li₇La₃Zr₂O₁₂ Keramiken des Li-SiCON-Typs, bsp. Li_{1+x+y}Alₓ(Ti,Ge)₂₋ₓSi_{y}P_{3-y}O₁₂ mit 0 ≤ x ≤ 1 und 0 ≤ y ≤ 1. Es können die Li-Ionen leitenden Festelektrolytmaterialien verwendet werden wie sie in DE 102007030604 oder in EP 1926164 beschrieben sind.

Die Lithiumzelle umfasst ferner eine Anodenstruktur, auf der die Festelektrolytstruktur angeordnet ist. Die Anodenstruktur umfasst elementares Lithium und ist durch die Festelektrolytstruktur von der elektrisch leitenden Kathodenstruktur getrennt. An der Anodenstruktur ist vorzugsweise ein weiterer elektrischer Kontakt vorgesehen, der den Anodenanschluss der Lithiumzelle vorsieht. Dieser elektrische Kontakt, der den Anodenanschluss der Lithiumzelle vorsieht, kann insbesondere an einer Stirnseite der Anodenstruktur mit dieser elektrisch verbunden sein. Die Anodenstruktur ist von dem aktiven Material zunächst durch die Festelektrolytstruktur elektrisch getrennt und kann aufgrund der Kathodenstruktur räumlich von dieser getrennt. Es ergibt sich daher die Schichtfolge: Anodenstruktur (mit elementarem Lithium) - Festelektrolytstruktur (Li-Ionen leitend, elektrisch isolierend) - Kathodenstruktur (Elektronen leitend/Li-Ionen leitend) - aktives Material (Schwefel oder Katalysatormaterial zur Unterstützung von Lithium-Sauerstoff-Reaktionen).

Da die Anodenstruktur einen Außenpunkt dieser Strukturreihenfolge bzw. Schichtreihenfolge darstellt, kann die Strukturabfolge zu beiden Seiten der Anodenstruktur zueinander gespiegelt wiederholt werden. Somit umfasst die Anodenstruktur insbesondere zwei Seiten, auf denen jeweils zunächst die erfindungsgemäße Festelektrolytstruktur angeordnet ist, auf der sich wiederum jeweils die Kathodenstruktur wie oben beschrieben befindet. Somit werden beide Seiten der Anodenstruktur verwendet, wodurch der Herstellungsprozess effizienter vorgesehen werden kann und sich eine höhere spezifische Oberfläche eines Akkumulators ergibt, der aus einer Vielzahl von erfindungsgemäßen Lithiumzellen besteht.

Die Anodenstruktur kann im einfachsten Fall eine durchgehende Platte oder Schicht aus elementarem Lithium sein. Bevorzugt wird jedoch die Elektronenleitung in der Anodenstruktur unterstützt durch eine Schicht mit hoher spezifischer Leitfähigkeit, beispielsweise aus Kupfer oder aus Aluminium, im Allgemeinen aus einem Metall oder aus einer Legierung. Die Kupferschicht kann sich innerhalb der Anodenstruktur erstrecken, so dass die Kupferschicht die Anodenstruktur in zwei Teile aufteilt, zwischen der die Kupferschicht angeordnet ist. Alternativ oder in Kombination hierzu kann eine leitende Schicht auf einer Oberfläche der Anodenstruktur vorgesehen sein, das heißt zwischen Festelektrolytstruktur und Anodenstruktur, wobei diese Schicht nicht durchgängig ist, sondern durch mit Lithium gefüllte Lücken durchbrochen ist, so dass Li-Ionen in die Festelektrolytstruktur wandern können. Im Falle einer leitenden Schicht zwischen Festelektrolytstruktur und Anodenstruktur ist diese vorzugsweise gitterförmig, beispielsweise in Form einer gedruckten Struktur einer Metallschichtkaschierung oder Ähnlichem. Die leitende Schicht ist aus einem Material vorgesehen, das eine höhere spezifische Leitfähigkeit als Lithium aufweist, insbesondere aus einem Metall oder einer Legierung, beispielsweise aus Aluminium oder Kupfer. Die elektrisch leitende Schicht innerhalb der Anodenstruktur oder zwischen der Anodenstruktur und der Festelektrolytstruktur kann auch von einer gesinterten Schicht aus elektrisch leitendem Material (im Allgemeinen Metall oder Legierungen, insbesondere Aluminium oder Kupfer) vorgesehen sein. Die elektrisch leitende Schicht ist durchgängig leitend, ist jedoch insbesondere dann von Lücken durchbrochen, die von Lithium befüllt sind, wenn die elektrisch leitende Schicht zwischen Festelektrolytstruktur und Anodenstruktur vorgesehen ist.

Eine weitere Ausführungsform der Erfindung sieht vor, dass die Anodenstruktur von einem Festschaum, beispielsweise einem Metallschaum oder einem Schaum aus einer Legierung vorgesehen ist, der von Lithium-Metall durchsetzt ist. Zum einen ermöglicht der Festkörperschaum eine elektrische Ableitung und zum anderen den unmittelbaren Kontakt von Lithium zu der Festelektrolytstruktur, so dass Li-Ionen durch die Festelektrolytstruktur wandern können. Die Anode kann ferner unmittelbar an die Festelektrolytstruktur angebracht werden, indem Klebemittel verwendet wird, vorzugsweise unter Verwendung eines Kunststoff- oder Polymerrahmens, der die Komponenten der Lithiumzelle hält. Das Klebemittel ist vorzugsweise leitend für Elektronen und für Lithiumionen und kann insbesondere Zusätze umfassen, die eine elektrische Leitung und eine Li-Ionenleitung unterstützen.

Das Trägermaterial ist sowohl Elektronen leitend als auch für Li-Ionen leitend und weist vorzugsweise gegenüber Lithium ein Elektrodenpotenzial von maximal 2,9 V oder maximal 2 V auf. Als Trägermaterial eignen sich insbesondere Li-Ti-Oxide, wobei ein Teil des Lithiums durch Magnesium ersetzt sein kann, ein Teil des Titans von Niob oder Tantal ersetzt sein kann oder beides.

Als aktives Material eignet sich insbesondere Schwefel in Form von Partikeln, wenn die Lithiumzelle als Lithium-Schwefelzelle ausgeführt ist. Im Falle von Lithium-Sauerstoffzellen ist das aktive Material Katalysatormaterial, welches die elektro-chemische Reaktionen von Lithium und Sauerstoff unterstützt, insbesondere α-MnO₂. Das Katalysatormaterial liegt vorzugsweise nanokristallin oder als Partikel bzw. Pulver vor und ist auf den Trageflächen verteilt.

Die Festelektrolytstruktur ist aus einem Material vorgesehen, das Li-Ionen leitet und elektrisch isolierend ist. Als Material eignet sich insbesondere Glaskeramik, Lithium-basiertes Phosphatglas oder andere Festelektrolyte. Als Material für die Festelektrolytstruktur ist insbesondere eine Lithium-Sulfat-Phosphor-Sulfat-Glaskeramik geeignet, insbesondere (n)Li₂S·(1-n)P₂S₅ mit n = 50...90, 60...80, 65... 75 oder ca. 70.

Als Material für die elektrischen Kontakte, die den Kathodenanschluss und den Anodenanschluss bilden, sind insbesondere Metalle oder Legierungen geeignet, insbesondere Kupfer oder Aluminium, die als Streifen verarbeitet sind.

Die Erfindung wird ferner vorgesehen von einem Lithiumakkumulator, der eine Vielzahl von erfindungsgemäßen Lithiumzellen umfasst. Der Lithiumakkumulator umfasst ferner eine Halterung, in der eine Vielzahl von erfindungsgemäßen Lithiumzellen in Form eines Stapels angeordnet ist. Die Halterung sieht nicht nur die mechanische Befestigung vor, sondern umfasst auch elektrische Kontakte, um die Lithiumzellen elektrisch miteinander zu verbinden. Eine besonders einfache Ausführungsform sieht vor, dass die elektrischen Kontakte der Halterung vorzugsweise Steckkontakte umfassen, so dass die elektrischen Kontakte der Lithiumzelle, das heißt der Kathodenanschluss und der Anodenanschluss durch eine Steckverbindung mit den elektrischen Kontakten der Halterung verbunden werden können, so dass die Lithiumzellen in die Halterung eingesteckt sind und dadurch sowohl mechanisch als auch elektrisch verbunden sind. Vorzugsweise sind die Lithiumzellen mit schichtförmigen Elektroden ausgestattet, die den Kathodenanschluss und den Anodenanschluss vorsehen. Ein derartiger Kathodenanschluss erstreckt sich beispielsweise in einem Randbereich der Festelektrolytstruktur auf einer Oberfläche der Festelektrolytstruktur, wobei in diesem Randbereich die Festelektrolytstruktur keine Kathodenstruktur trägt. Insbesondere stößt der Kathodenanschluss unmittelbar an eine sich an den Randabschnitt anschließende Kathodenstruktur an und ist in unmittelbarer Verbindung mit einer Stirnfläche bzw. Endfläche der Kathodenstruktur. Andere Ausführungsformen sehen vor, dass der Kathodenanschluss auf einem Rahmenelement angeordnet ist, innerhalb dessen sich die Anodenstruktur erstreckt, wobei die Rahmenstruktur selbst nicht leitend ist, so dass der Kathodenanschluss lediglich eine Außenfläche bzw. eine Stirnfläche der Kathodenstruktur elektrisch kontaktiert. Vorzugsweise erstreckt sich der Kathodenanschluss als ein Streifen an einem Randabschnitt der Lithiumzelle, wobei sich der Kathodenanschluss ebenso als Streifen an einem Randabschnitt der Lithiumzelle erstreckt, jedoch auf der entgegengesetzten Seite der Lithiumzelle. Falls die Anodenstruktur eine zwischenliegende leitende Schicht umfasst, die eine zweiteilige Lithiumschicht trennt, so kann sich diese über die Anodenstruktur hinaus durch ein Rahmenelement hindurch erstrecken und an einem Randabschnitt der Rahmenstruktur aus dieser heraustreten, beispielsweise durch eine Ausnehmung an einem Rand der Rahmenstruktur. Der so freigelegte Anodenanschluss erstreckt sich in Form eines Streifens parallel zu der Erstreckungsebene der Lithiumzelle (zu der sich auch der Kathodenanschluss parallel erstreckt), wobei jedoch Kathodenanschluss und Anodenanschluss auf gegenüberliegenden Seiten oder im Allgemeinen auf unterschiedlichen Seiten der Lithiumzelle angeordnet sind. Dadurch kann besonders einfach ein Zellenstapel durch Steckverbindungen vorgesehen werden.

Alternativ zu einem Lithiumakkumulator, dessen Halterung alle Lithiumzellen miteinander verbindet, kann auch eine Halterung vorgesehen sein, die lediglich für jede Lithiumzelle Kontakte aufweist, die jedoch für jede Lithiumzelle individuell sind und Kontakte unterschiedlicher Lithiumzellen nicht miteinander verbunden sind. Ferner kann durch die Stapelanordnung auf einfache Weise eine Serienschaltung oder eine Parallelschaltung der Zellen dargestellt werden, indem entweder auf jeder Seite durchlaufende Kontakte innerhalb der Halterung verwendet werden (Parallelschaltung) oder indem alternierend unterbrochene Kontakte verwendet werden und die Zellen antiparallel (das heißt abwechselnd Anoden- und Kathodenanschluss auf einer Seite) in der Halterung angeordnet werden. Nähere Ausführungsformen erfindungsgemäßer Lithiumakkumulatoren sind in den Figuren dargestellt.

Die Erfindung wird ferner vorgesehen durch ein Verfahren zur Herstellung einer Lithiumzelle, wobei, wie oben beschrieben, die Kathodenstruktur durch Gefriergießen eines Trägermaterials vorgesehen wird, welches auch zur Darstellung der Kathodenstruktur der erfindungsgemäßen Lithiumzellen verwendet wird, wobei mittels des Gefriergießens eine durchgehende Trägerschicht erzeugt wird, die eine Vielzahl sich von der Grundfläche der Trägerschicht erstreckende Stege erzeugt wird. Vorzugsweise werden die durchgehende Trägerschicht und die Stege in demselben Gefrierungsschritt erzeugt, alternativ kann jedoch zunächst eine durchgehende Trägerschicht vorgesehen werden, auf die mittels Gefriergießen die Stege stoffschlüssig angebracht werden. Die Erfindung sieht ferner vor, dass nach der Erzeugung der Stege die Tragestrukturen vorgesehen werden durch Abscheiden des Trägermaterials in Form von Mikro- oder Nanostrukturen, vorzugsweise als Nanodrähte, wobei hierdurch eine besonders hohe spezifische Oberfläche erreicht wird. Nachdem Trägerstrukturen an den Stegen angeordnet sind, wird aktives Material auf den Trageflächen angeordnet, die von den Tragestrukturen vorgesehen werden. Die verwendeten Materialien und Strukturen entsprechen den Materialien und Strukturen, die oben anhand der erfindungsgemäßen Lithiumzelle bzw. anhand des oben beschriebenen Lithiumakkumulators dargestellt sind.

Das Verfahren sieht insbesondere vor, dass eine Festelektrolytstruktur derart vorgesehen wird, wie sie oben anhand der Lithiumzelle definiert ist. Die Fest-elektrolytstruktur dient als Basis für den Aufbau der Kathodenstruktur, so dass zunächst die Festelektrolytstruktur vorgesehen wird, auf die Trägerschicht und die Stege aufgebracht werden. Als unmittelbares Aufbringen wird ein unmittelbarer Kontakt zwischen Trägerschicht und Festelektrolytstruktur angesehen, und ebenso eine Verbindung mittels einer Klebeschicht, die für Li-Ionen leitend ist.

Auf die Festelektrolytstruktur wird die Kathodenstruktur durch Gefriergießen aufgebracht. Hierbei dient die Festelektrolytstruktur als Gussform bzw. Gießunterlage.

Die oben anhand der erfindungsgemäßen Lithiumzelle oder anhand des oben beschriebenen Lithiumakkumulators dargestellte Anodenstruktur kann auf verschiedene Weisen vorgesehen werden. Zunächst kann eine Elektrodenschicht vorgesehen sein, die zwischen zwei Lithiumschichten angeordnet wird, woraufhin die Lithiumschichten zusammengepresst werden oder auf andere Weise mit der zwischenliegenden Elektrodenschicht verbunden werden, wodurch die Elektrodenschicht eine Stromableitung vorsieht. Die Elektrodenschicht kann ferner mit einem Kontakt vorgesehen sein, der als Anodenkontakt dient. Alternativ wird eine Metallschaumschicht verwendet, die mit Lithium durchsetzt ist, wobei Metall (beispielsweise Aluminium oder Kupfer) geschäumt wird, vorzugsweise zusammen mit Lithium bzw. Lithiumpartikeln, so dass das Lithium innerhalb des Metalls während des Schäumens verteilt ist und sich beim Erstarren der Metallschaumschicht die gewünschte Lithiumverteilung ergibt. Ferner kann ein Anodenkontakt an dem Metallschaum angebracht werden, nachdem die Metallschaumschicht erzeugt wurde.

Die beiden oben beschriebenen Vorgehensweisen zur Herstellung der Anodenstruktur gehen beide davon aus, dass die Anode zunächst getrennt von der Festelektrolytstruktur vorgesehen wird, woraufhin die Festelektrolytstruktur, vorzugsweise zu beiden Seiten der Anodenschicht, angeordnet wird. Dieses Anordnen kann ausgeführt werden durch Verkleben der Anodenschicht mit der Festelektrolytstruktur (vorzugsweise durch einen Kleber). Das Befestigen der Festelektrolytstruktur(en) an die Elektrodenschicht kann ferner mit der Anordnung eines Rahmens einhergehen, wobei in dem Rahmen die Anodenstruktur angeordnet wird und daraufhin der Rahmen, die Anodenstruktur, mit der Festelektrolytstruktur verklebt wird. Das Anordnen und Verkleben des Rahmens kann ferner einhergehen mit dem Anbringen von elektrischen Kontakten an der Anodenstruktur. Darüber hinaus kann mit dem Anordnen des Rahmens auch ein Kathodenkontakt zu der Kathodenstruktur hergestellt werden, die sich auf der Festelektrolytstruktur befindet. Der äußere Rand des Rahmens bildet hierbei eine Haltestruktur, auf der ein elektrischer Kathodenkontakt angeordnet wird. Vorzugsweise werden die Festelektrolytstrukturen bereits mit darauf angebrachter Kathodenstruktur vorgesehen, insbesondere in der sich bereits aktives Material befindet, bevor die Festelektrolytstruktur mit der Anodenschicht befestigt wird.

Ferner können zwei Festelektrolytstrukturen (vorzugsweise bereits mit Kathodenstruktur und aktivem Material vorgesehen) zueinander angeordnet werden, um zwischen sich einen Zwischenraum aufzuspannen, in den Lithium eingebracht wird, wobei das eingebrachte Lithium die Anodenstruktur bildet. Alternativ können zunächst die Festelektrolytstrukturen ohne Kathodenstrukturen zueinander angeordnet werden, das Lithium kann daraufhin in den Zwischenraum eingebracht werden, woraufhin die Kathodenstrukturen auf den jeweiligen Festelektrolytstrukturen aufgebracht werden. Das Lithium kann in den Zwischenraum zwischen zwei Festelektrolytstrukturen eingebracht werden durch elektrochemisches Pumpen von Lithium in den Zwischenraum oder durch Gießen des Lithiums in den Zwischenraum. Vorzugsweise werden die Festelektrolytstrukturen zunächst von einer Rahmenstruktur zusammengehalten, in deren Innerem sich der Zwischenraum erstreckt. Nachdem die Festelektrolytstrukturen mit dem Kunststoffrahmen befestigt sind, wird Lithium in den Zwischenraum eingebracht, insbesondere durch Gießen des Lithiums in eine seitliche Öffnung in dem Rahmen, die daraufhin verschlossen wird. Um die Kathodenstrukturen vor Belastungen zu schützen, die sich durch das Einbringen von Lithium in den Zwischenraum ergeben, werden die Kathodenstrukturen vorzugsweise nach dem Einbringen des Lithiums in dem Zwischenraum erzeugt bzw. auf den Festelektrolytstrukturen aufgebracht.

Als Rahmen kann ein Keramikrahmen oder ein Kunststoffrahmen verwendet werden. Bei Verwendung eines Keramikrahmens kann die Festelektrolytstruktur / Kathodenstruktur mit dem Rahmen verbunden werden, wobei zum Befestigen Glaslot oder Kunststofflot oder Klebemittel verwendet wird. Bei der Verwendung von Glaslot kann der Sinterprozess vor oder nach dem Anordnen der Festelektrolytstruktur / Kathodenstruktur im Rahmen ausgeführt werden. Insbesondere kann bei Verwendung von Glaslot der Rahmen während des Sinterprozesses der Festelektrolytstruktur / Kathodenstruktur mit dieser verbunden werden, insbesondere wenn das Glaslot eine Glasübergangstemperatur aufweist, die (geringfügig) unterhalb der Temperatur des Sinterprozesses liegt. Die Stege werden ferner vorzugsweise zusammen mit der Trägerstruktur gesintert, insbesondere wenn diese aus dem gleichen Material und einteilig ausgebildet sind.

Bei der Verwendung eines Kunststoffrahmens wird dieser nach dem Sintern der Kathodenstruktur mit diesem verbunden, vorzugsweise mittels Klebemittel oder Kunststofflot.

Die Erfindung wird ferner realisiert durch ein Verfahren zur Herstellung eines Lithiumakkus, bei dem zunächst das erfindungsgemäße Verfahren zur Herstellung der erfindungsgemäßen Lithiumzellen ausgeführt wird. Die Lithiumzellen werden hierbei mit elektrischen Kontakten versehen, insbesondere an einem Seitenrand der Trägerschicht. Die Kontakte umfassen eine Kathodenelektrode bzw. einen elektrischen Kontakt für die Kathode sowie einen elektrischen Kontakt für die Anode. Für die Anode und für die Kathode werden üblicherweise verschiedene Seiten der Trägerschicht verwendet, insbesondere gegenüberliegende Seiten. Besonders bevorzugt werden die Kathoden- und Anodenkontakte an einem Kunststoffrahmen angeordnet, der bereits an der Festelektrolytstruktur befestigt ist. Erfindungsgemäß werden Lithiumzellen in Form von Stapeln in einer Halterung des Akkumulators eingesteckt, wodurch elektrische Kontakte der Halterung mit den Anoden bzw. Kathodenkontakten elektrisch verbunden werden. Die vorgesehene elektrische Verbindung umfasst ferner eine mechanische Verbindung, vorzugsweise mittels eines Federkontaktes, der beispielsweise von der Halterung des Akkumulators vorgesehen werden kann. Dadurch können die Lithiumzellen auf einfache Weise durch Einstecken gestapelt werden, wobei gleichzeitig die mechanischen Verbindungen durch Federkontakte auch eine stabile mechanische Anordnung der Lithiumzellen des Stapels vorsehen.

Die Festelektrolytstruktur sowie die Trägerschicht und die Stege der Kathodenstruktur können durch sequenzielle Beschichtungsverfahren aufeinander aufgebracht werden. Insbesondere eignen sich Bandgießverfahren, Beschichtungsverfahren (wobei insbesondere die Trägerschicht und die Stege auf die bereits vorgefertigte, ausgehärtete Festelektrolytstruktur aufgebracht werden), oder Drucktechniken. In diesem Fall ist die Festelektrolytstruktur als ebene Schicht vorgesehen, wie auch die durchgehende Trägerschicht als ebene Schicht vorgesehen wird, die sich parallel zu der Festelektrolytstruktur auf dieser erstreckt. Die Festelektrolytstruktur und die Trägerschicht bzw. die sich darauf erstreckenden Stege können in formbaren Zustand aufeinander angeordnet werden, woraufhin durch einen Trocknungsprozess und/oder durch einen gemeinschaftlichen Brennprozess Kathodenstruktur und Festelektrolytstruktur erzeugt wird. Hierbei kann zunächst die Festelektrolytstruktur vorgesehen werden, auf die die Trägerschicht aufgebracht wird, oder zunächst kann die Trägerschicht vorgesehen werden, auf die die Festelektrolytstruktur aufgebracht wird. Im letzteren Fall werden die Stege nach dem Vorsehen der Trägerschicht erzeugt. Diese beschriebenen Verfahren umfassen insbesondere, dass die Festelektrolytstruktur und/oder die Trägerschicht als Vorläufermaterialien zueinander angeordnet werden (oder einzeln vorgesehen werden), woraufhin mittels eines Trocknungs- bzw. Brennprozesses die endgültige, trockene Trägerschicht, die Stege und/oder die Festelektrolytstruktur vorgesehen werden.

Für den Rahmen wird elektrisch nicht leitendes Material verwendet. Anstatt eines Kunststoffrahmens kann auch ein Keramikrahmen verwendet werden, der vorzugsweise weder für Li-Ionen noch für Elektronen leitend ist, indem zunächst der Keramikrahmen vorgesehen wird, und die Trägerschicht, die Stege bzw. die Festelektrolytstruktur in diesem angeordnet werden, oder der Keramikrahmen kann als Vorläufermaterial zusammen mit der Festelektrolytstruktur und der Trägerschicht (vorzugsweise ebenso als Vorläufermaterial) ausgeformt werden, woraufhin ein gemeinschaftlicher Brennprozess das Trägermaterial, das Keramikmaterial des Rahmens und die endgültige Festelektrolytstruktur erzeugt. Rahmen und Festelektrolytstruktur können durch den Sinterprozess miteinander verbunden werden, in dem auch die Stege gesintert werden. Die Keramikmaterialien weisen eine Sintertemperatur auf, die der Brenntemperatur des Trägermaterials bzw. der Festelektrolytstruktur entspricht, beispielsweise indem Mischungen aus ZrO₂/Glas oder Al₂O₃/Glas verwendet werden. Gegenüber einem Kunststoffrahmen hat dies den Vorteil, dass ein einzelner gemeinschaftlicher Brennprozess (Co-Firing) als Sinterschritt aus den Vorläufern der Trägerschicht, gegebenenfalls auch der Stege, der Festelektrolytstruktur und des Rahmens einen Großteil der erfindungsgemäßen Lithiumzelle erzeugt. Das aktive Material, insbesondere Schwefel, wird vorzugsweise nach dem Brennprozess vorgesehen, wobei dies gegebenenfalls auch für die Tragestrukturen gilt, da diese durch ihre Feinstrukturen gegebenenfalls durch den Brennprozess belastet werden. Ferner wird das elementare Lithium der Anode nach dem Sintern in der erfindungsgemäßen Struktur angeordnet.

### Kurze Beschreibung der Zeichnungen

- Die Figur 1: zeigt eine Grundstruktur einer erfindungsgemäßen Lithiumzelle;
- die Figur 2a: zeigt eine Ausführungsform der erfindungsgemäßen Lithiumzelle in Schnittansicht;
- die Figur 2b: zeigt die in Figur 2a dargestellte Lithiumzelle in Draufsicht;
- die Figur 3: zeigt eine doppelseitige Ausführung der erfindungsgemäßen Lithiumzelle im Querschnitt;
- die Figur 4: zeigt eine Ausführung eines erfindungsgemäßen Lithiumakkumulators mit einer Vielzahl von erfindungsgemäßen Zellen;
- die Figuren 5a-c: zeigen Alternativen zur Ausführung elektrischer Kontakte für einen erfindungsgemäßen Lithiumakkumulator.

### Detaillierte Beschreibung der Zeichnungen

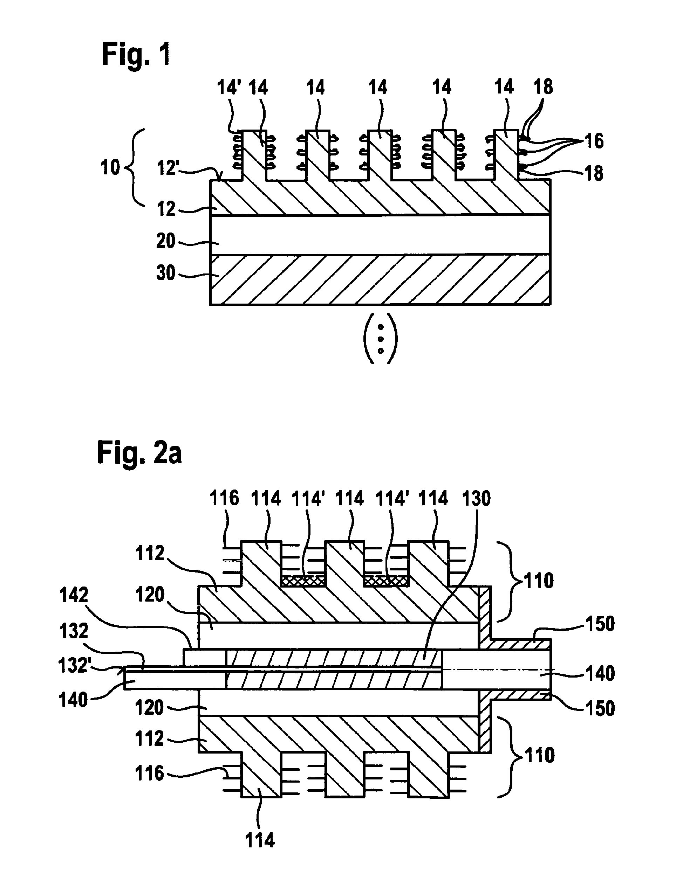

Die Figur 1 zeigt eine erfindungsgemäße Lithiumzelle im Querschnitt. Die Figur 1 dient zur Darstellung einiger wesentlicher Merkmale der Lithiumzelle anhand einer grundlegenden Struktur. Die Lithiumzelle der Figur 1 umfasst eine Kathodenstruktur 10 mit einer Trägerschicht 12 und einer Vielzahl von Stegen 14. Die Kathodenstruktur 10 umfasst ferner Tragestrukturen 16, die lediglich symbolhaft dargestellt sind und insbesondere durch Nanodrähte vorgesehen werden. Auf den Tragestrukturen 16 befindet sich aktives Material 18. Das aktive Material ist lediglich symbolhaft dargestellt und ist in Form von feinen Partikeln auf der gesamten Oberfläche der Tragestrukturen 16 angeordnet. Die Stege 14 umfassen Stegflächen 14', von denen aus sich die Tragestrukturen 16 erstrecken, wobei die Stege 14 selbst sich von einer Grundfläche 12' weg erstrecken, die von der einer Oberfläche der durchgehenden Trägerschicht 12 gebildet wird. Auf der den Stegen gegenüberliegenden Seite der durchgehenden Trägerschicht 12 befindet sich eine Festelektrolytstruktur 20. Auf die Festelektrolytstruktur 20 folgt auf der Seite der Festelektrolytstruktur, die der Trägerschicht entgegengesetzt ist, eine Anodenstruktur 30, die Lithium umfasst. Die Anodenstruktur 30, die Festelektrolytstruktur 20 sowie die durchgehende Trägerschicht 12 sind in zueinander parallelen, planaren Schichten vorgesehen. Die Anodenstruktur 30 stellt Li-Ionen bereit, die durch die Festelektrolytstruktur 20 zur Kathodenstruktur 10 gelangen können und umgekehrt. Die Festelektrolytstruktur 20 ist ferner ein elektrischer Isolator.

Im Gegensatz hierzu ist die Kathodenstruktur 10, insbesondere die durchgehende Trägerschicht 12, die Stege 14 und die Tragestrukturen 16 aus Li-Ionen leitendem Material, das auch elektrisch leitend ist. Die Festelektrolytstruktur 20 trennt die Anodenstruktur 30 elektrisch von der Kathodenstruktur 10, ermöglicht jedoch einen Ionentransport zum Entladen und Aufladen der Zelle. Die in Figur 1 dargestellte Zelle weist nur eine einseitige Kathodenstruktur, ausgehend von der Anodenstruktur, auf, wobei sich jedoch an der Seite der Anodenstruktur, die der dargestellten Elektrolytstruktur abgewandt ist, eine weitere Festelektrolytstruktur und daraufhin eine weitere Kathodenstruktur anschließen kann, so dass sich eine bezogen auf die Anodenstruktur 30 gespiegelte Anordnung ergibt.

Die Figur 2a zeigt eine Symboldarstellung eines beidseitigen Aufbaus. Die Zelle der Figur 2a umfasst eine Anodenstruktur 130, in der sich eine Elektrodenschicht 132 zur Unterstützung der Leitfähigkeit erstreckt. Die Elektrodenstruktur 132 ist von der Festelektrolytstruktur 120 durch Lithium der Anodenstruktur getrennt. An die beidseitigen Festelektrolytstrukturen 120 schließt sich jeweils eine Kathodenstruktur 110 an, die eine durchgehende Schicht 112, Stege 114 und Tragestrukturen 116 umfasst. Das auf den Tragestrukturen 116 vorgesehene aktive Material ist zur besseren Darstellung in Figur 2a nicht gezeigt. Die beiden sich gegenüberliegenden Festelektrolytstrukturen 120 (und damit auch die sich gegenüberliegenden Kathodenstrukturen 110) sind nicht nur durch die Anodenstruktur 130, sondern auch eine Rahmenstruktur 140 voneinander getrennt.

In der Ausführung der Figur 2a ist die Rahmenstruktur 140 zweiteilig ausgeführt, um zum einen die Elektrodenstruktur 132 der Anode 130 zu tragen und zum anderen, um eine Elektrodenstruktur 150 der Kathode zu tragen. Sowohl die Elektrodenstruktur 132 der Anode als auch die Elektrodenstruktur 150 der Kathode ist aus leitendem Material, insbesondere aus Metall oder einer Legierung vorgesehen, insbesondere aus Kupfer oder auch Aluminium. Die Elektrodenstruktur 150 erstreckt sich zum einen auf einer Oberfläche des Rahmens 140 und zum anderen an einer Stirnseite der Kathodenstruktur 110, um diese elektrisch zu kontaktieren. Die Elektroden 132 und 150 bilden jeweils Abschnitte aus, die sich entlang der Erstreckungsfläche der Lithiumzelle erstrecken, so dass eine einfache Kontaktierung möglich ist. Um die Elektrodenstruktur 132 der Anode zu halten, ist der Rahmen 140 zweiteilig ausgeführt, wobei ein Teil der oberen Kathoden-/Fest-elektrolytstruktur zugeordnet ist und ein weiterer Teil der unteren Kathoden-/Fest-elektrolytstruktur zugeordnet ist. Dadurch lässt sich die Elektrodenstruktur 132 der Anode auf einfache Weise zwischen die beiden Rahmenteile einlegen bzw. dadurch ist es ermöglicht, dass sich die Elektrodenstruktur gerade erstrecken kann und aus der zweiteiligen Lithium-Anodenstruktur herausstehen kann. Bei der Herstellung wird die Anodenstruktur nach dem Sinterprozess der Stege und der Trägerschicht (während dem ein Keramikrahmen mit dem Festelektrolyt verbunden werden kann) angeordnet.

Um Zugriff auf die Oberfläche der Elektrodenstruktur 132 der Anode senkrecht zur Anodenstruktur zu ermöglichen, ist ein Teil des Rahmens mit einem schmaleren Rand vorgesehen als der andere Teil des Rahmens, zumindest an der Seite, an der die Elektrodenstruktur 132 der Anode herausgeführt wird. Alternative Ausführungsformen, die hier nicht dargestellt sind, sehen einen zur Elektrodenstruktur 132 der Anode symmetrischen Rahmen vor, wobei eine Kontaktierung an der Stirnseite der Elektrodenstruktur 132 vorgesehen wird. Eine beispielhafte Kontaktierungsstelle an der Stirnseite ist mit dem Bezugszeichen 132' in der Figur 2a dargestellt.

Die Ausführung der Figur 2a umfasst ferner beispielhafte elektrische Überbrückungen 114', die in Form von Leiterelementen oder Metallstreifen zwischen den Stegen der Kathodenstruktur 110 vorgesehen sind und die aus Material mit hoher Leitfähigkeit ausgeführt sind, beispielsweise aus Kupfer oder aus Aluminium. Diese unterstützen die elektrische Verbindung zwischen den Stegen 114 und erhöhen somit den Leitwert, der von dem Trägermaterial der Kathodenstruktur vorgesehen wird. Die elektrischen Überbrückungen können insbesondere vorgesehen sein durch Metallstreifen, die auf den Abschnitten der Grundfläche der Trägerschicht vorgesehen sind, die zwischen den Stegen 114 liegt. Die Metalistreifen 114' sind lediglich optional und daher mit unterbrochenen Linien dargestellt. Die Unterstützung des Leitwerts des Trägermaterials kann erforderlich sein, da zwar das Trägermaterial ein Mischleiter ist, d. h. Ionen und auch Elektronen leitet, jedoch gegebenenfalls nicht die hohe spezifische Leitfähigkeit wie beispielsweise Kupfer oder ein anderes Metall aufweist. Vorzugsweise sind die Metallstreifen 114' mit der Elektrodenstruktur 150 verbunden, beispielsweise mittels einer Leiterbahnstruktur auf der Trägerschicht.

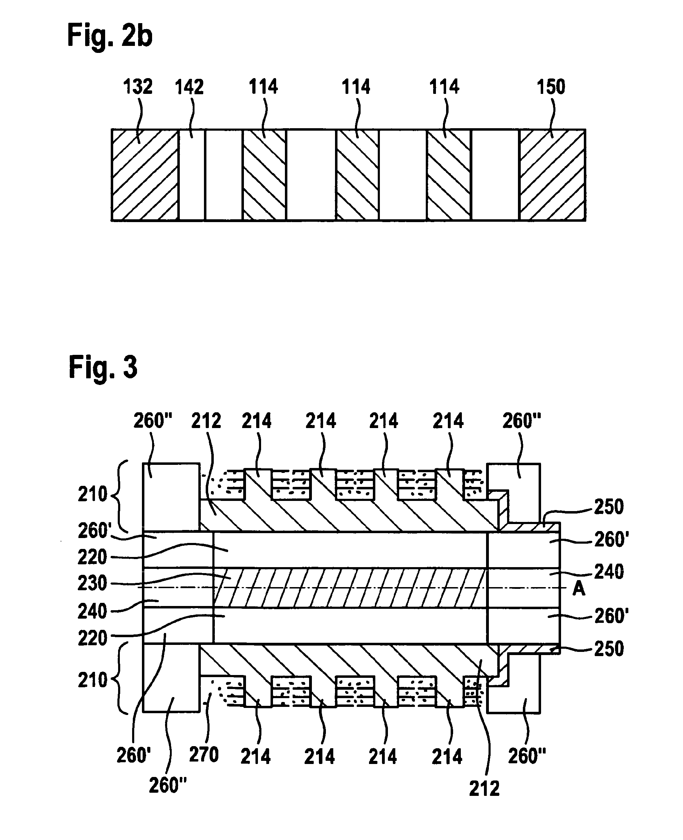

Die Figur 2b zeigt die in Figur 2a dargestellte Lithiumzelle in Draufsicht. Es ist zu erkennen, dass sich die Stege 114 parallel zueinander erstrecken, wobei aus der Zelle zunächst ein schmaler Randabschnitt 142 heraussteht, der auch in Figur 2a dargestellt ist. Es schließt sich die Oberfläche der Elektrodenstruktur 132 der Anode an. Auf der gegenüberliegenden Seite schließt sich die Elektrodenstruktur 150 der Kathode an, die beide als leitende Flächen vorgesehen sind, beispielsweise Flächen einer Metall- oder Legierungsschicht, beispielsweise aus Kupfer oder aus Aluminium, insbesondere einer Kupferkaschierung.

Die Figur 3 zeigt eine weitere Ausführungsform der Erfindung, die auch zur Erläuterung des erfindungsgemäßen Verfahrens dient. Die Lithiumzelle der Figur 3 umfasst zwei spiegelbildliche Kathodenstrukturen 210, die jeweils eine durchgehende Schicht 212 sowie Stege 214, die sich von der Trägerschicht 212 nach außen erstrecken, umfassen. Die Kathodenstrukturen 210 sind jeweils auf einer Festelektrolytstruktur 220 vorgesehen, welche wiederum auf einer Anodenstruktur 230 vorgesehen sind. Seitlich der Anodenstruktur 230 ist ein Rahmen 240 vorgesehen, innerhalb dessen sich die Anodenstruktur befindet. Auf dem Rahmen 240 ist eine weitere Rahmenstruktur 260 angeordnet, die sich an einer Seite der Lithiumzelle befindet, in der keine Kathodenkontaktierung vorgesehen ist. Der Rahmen 260 erstreckt sich seitlich von der Festelektrolytstruktur sowie seitlich von der Kathodenstruktur 210 und überragt diese in einer Richtung senkrecht zur Erstreckungsebene der Lithiumzelle. An einer Seite der Lithiumzelle ist eine Kathodenkontaktierung 250, die sich auf einem Teil des Rahmens 260' erstreckt, wobei der Rahmen 260' lediglich seitlich von der Festelektrolytstruktur, nicht jedoch seitlich von der Kathodenstruktur 210 vorgesehen ist. Die Kathodenkontaktierung 250 erstreckt sich auf dem Rahmen 260' sowie seitlich von der durchgehenden Trägerschicht 212 und (optional) auch zum Teil auf einem Randabschnitt der Grundfläche. Auf der Kathodenkontaktierung 250 ist ein weiteres Rahmenelement 260" angeordnet, das sich seitlich von der Kathodenstruktur und über diese hinaus erstreckt und mit der gleichen Höhe wie die gegenüberliegende Rahmenstruktur 260 abschließt. Das Rahmenelement 260" erstreckt sich nicht vollständig auf der Oberfläche der Kathodenkontaktierung 250, sondern es verbleibt ein äußerer Rand, der der Kathodenkontaktierung 250, dessen Oberfläche ohne Weiteres von außen kontaktiert werden kann.

Zur Herstellung der in Figur 3 dargestellten Ausführung wird zunächst die Festelektrolytstruktur 220 auf einem Trägerband vorgesehen (nicht dargestellt), welches später im Rahmen der Herstellung entfernt wird. Daraufhin wird ein Rahmen 260 auf dem Trägerband angeordnet, innerhalb dessen sich die Festelektrolytstruktur befindet. Festelektrolytstruktur und Rahmenelement 260 schließen in der gleichen Höhe ab. Ferner werden die Trägerschicht, die Stege und die Tragestrukturen auf der Festelektrolytstruktur 220 angeordnet, beispielsweise durch Gefriergießen. Der Rahmen (vorzugsweise aus Keramik) kann auch nach dem Erzeugen der Stege und der Trägerschicht auf dem Festelektrolyt angeordnet, wobei der Rahmen jedoch auch vorab mit dem Festelektrolyt verbunden sein kann, bevor Stege und Trägerschicht angeordnet und hergestellt werden. Es folgt die Anordnung des Kathodenkontakts 250, beispielsweise durch Aufbringen einer Metallisierung.

Der Rahmen 260" wird um die Kathodenstruktur herum seitlich angeordnet und geht über die Kathodenstruktur hinaus. Es folgt die Entfernung des Trägerbandes, so dass die Unterseite der Trägerschicht frei wird. Nach der Entfernung des Trägerband folgt der Sinterschritt, um die durch Gefriergießen ausgebildeten Formlinge zu verfestigen. Der Sinterschritt folgt vorzugsweise unmittelbar auf den Schritt des Gefriergießens. Nach dem Sintern wird die Anodenstruktur 230 vorgesehen. Zunächst wird der Rahmen 260, welcher sich um die Anodenstruktur herum erstreckt, auf der Unterseite des Rahmens 260' befestigt (beispielsweise durch Kleben). Es folgt die Anordnung der Anodenstruktur innerhalb des Rahmens 260', wobei hierbei zwei alternative Verfahren möglich sind.

Gemäß einem ersten Verfahren wird die Anodenstruktur durch eine zweiteilige Lithiumschicht vorgesehen, zwischen deren Teilen sich eine Metallschicht (insbesondere Kupfer) erstreckt. Die Metallschicht ragt seitlich aus der zweiteiligen Lithiumschicht heraus. Dadurch bildet sich ein äußerer Rand, der über einen ersten Teil eines zweiteiligen Rahmens 240 mit dem Rahmen 260' der Lithiumzelle verbunden wird. Eine weitere Anordnung der Kathodenstruktur inklusive der Festelektrolytstruktur und zugehöriger Rahmenteile wird wie oben beschrieben vorgesehen und in gleicher Weise auf der gegenüberliegenden Seite der Anodenstruktur angeordnet. Die Elektrodenschicht aus Kupfer, die zwischen den beiden Lithiumschichten liegt, verläuft entlang der Ebene A. Da die Elektrodenschicht der Anodenstruktur sich seitlich von dieser erstreckt, sind die Rahmenelemente 240 mit einer Dicke vorgesehen, die zusammen mit der Dicke der Elektrodenschicht der Dicke der Anodenschicht entspricht. Damit schließt der Rahmen 240 zum einen mit der Fläche der Anodenstruktur ab, die an die jeweilige Festelektrolytstruktur 220 angrenzt, und zum anderen verbleibt aufgrund einer verringerten Dicke (gegenüber der Dicke der Anodenstruktur) ein Höhenabschnitt, in dem sich Elektrode der Anode durch den Rahmen hindurch erstrecken kann, um so an der Seitenfläche des Rahmens 240 eine Elektrodenstirnseite vorzusehen, die eine Kontaktierung von außen ermöglicht. Ferner geben die Rahmenabschnitte 260 seitlich der Kathodenstruktur 210 mechanischen Halt, insbesondere auch für die Kontaktierung 250 der Kathode.

Eine weitere Möglichkeit ist es, zunächst die Festelektrolytstruktur 220, die Rahmen 260', 260", die Kathodenstruktur und die Kontaktierung 250 der Kathode wie oben beschrieben vorzusehen. Ausgehend von zwei bereits bestückten Festelektrolytstrukturen (d. h. die bereits die Kathodenstruktur und die Rahmen 260', 260" tragen) werden diese mit den jeweiligen Unterseiten der Festelektrolytstruktur (d. h. den der Kathodenstruktur entgegengesetzten Seiten) über einen Abstandhalter zusammengefügt, der als Rahmenelement dient. Dieses Rahmenelement kann beispielsweise mittels Glaslot befestigt werden. Es bildet sich ein Zwischenraum durch die Rahmenelemente 260 und die Unterseiten der Festelektrolytstruktur, in den Lithiummaterial eingeführt wird. Der Rahmen 240 weist beispielsweise eine seitliche Öffnung auf, durch die hindurch Lithium zugeführt werden kann. Alternativ kann Lithium durch elektrochemisches Pumpen eingefügt werden, wobei vorzugsweise jedoch zumindest das aktive Material nicht auf den Tragestrukturen vorgesehen ist und gegebenenfalls auch noch nicht die Tragestrukturen auf den Stegen vorgesehen sind. Nach dem Befüllen (beispielsweise durch Einfüllen flüssigen Lithiums) wird die Öffnung verschlossen. Falls der Rahmen 260 (aus Keramik) mit Glaslot befestigt wird, ddann kann durch einen Brennprozess der Rahmen 240, der die Anodenstruktur umgreift, durch zumindest teilweises Aufschmelzen des Glaslots mit dem jeweiligen Festelektrolyt 220 verbunden werden. Danach wird Lithium durch elektrochemisches Pumpen oder durch Eingießen in den Zwischenraum zwischen den beiden Festelektrolytstrukturen 220 eingebracht.

Beide Verfahren umfassen den Schritt des Einbringens von aktivem Material 270 in die Kathodenstruktur, insbesondere auf die Tragestrukturen der Stege 214 sowie auch auf Abschnitte der Grundfläche, auf denen kein Steg ausgebildet ist.

Bei allen Figuren 1-4 sind weder die Formen noch die Größenverhältnisse korrekt dargestellt. Die Stege sind insbesondere deutlich feiner als dargestellt, beispielsweise mit einem Abstand von wenigen Mikrometern bis zu einem Millimeter zueinander vorgesehen und haben im Wesentlichen eine konstante Dicke. Weitere Realisierungen sehen vor, dass sich die Stege in ihrem Querschnitt sich zu der Grundfläche hin verjüngen, es sind jedoch auch Stege denkbar, die sich von der Grundfläche weg verjüngen. Darüber hinaus sind die Tragestrukturen nur symbolhaft dargestellt, die Ausrichtung der Tragestrukturen relativ zu den Stegen und untereinander ist keinesfalls nur rein parallel, sondern kann mit beliebigen Krümmungen vorgesehen sein, insbesondere wenn es sich um Filz oder Vlies aus Nanodrähten handelt.

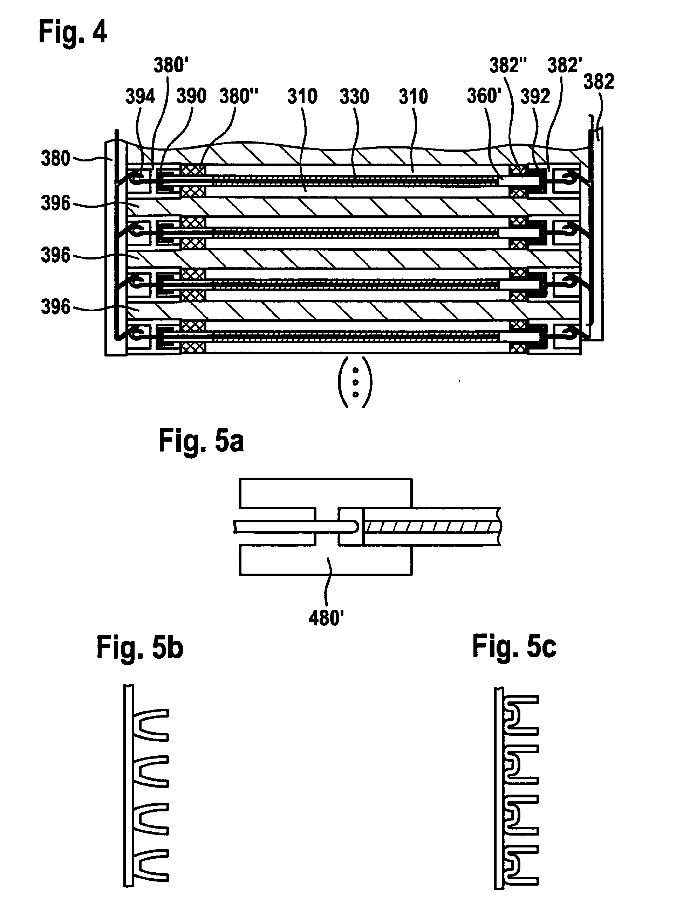

Die Figur 4 zeigt einen erfindungsgemäßen Akkumulator im Querschnitt, der eine Vielzahl von Lithiumzellen umfasst. Der Akkumulator umfasst eine Halterung mit einer Anodenableitung 380 und einer Kathodenableitung 382 sowie Halterungselemente 380', 380", 382', 382", mit denen mechanische und elektrische Kontakte zu den einzelnen Zellen vorgesehen werden. Die einzelnen Zellen sind zweiseitig ausgebildet mit Kathodenstrukturen 310 und einer zwischenliegenden Anodenstruktur 330. Innerhalb der Anodenstruktur ist eine Elektrode vorgesehen, die die Anodenstruktur in zwei Teile teilt. Die Halterung umfasst elektrische Kontakte 390, 392, mit denen Kathoden- und Anodenkontakte der einzelnen Zellen kontaktiert werden.

Auf der Anodenseite hält zunächst eine mechanische Halterung 380" einen Rahmenabschnitt, der sich seitlich von der Zelle weg erstreckt und durch den hindurch sich ein Teil der Elektrode der Anode hindurch erstreckt. Der Rahmenabschnitt endet an einer Seitenfläche der Zelle, an der sich ein elektrischer Kontakt 390 der Halterung befindet. Dieser ist wiederum in einem weiteren Halterungselement 380' bzw. wird von diesem durch ein Durchgangsloch gehalten, um so eine Außenkontaktierung 394 vorzusehen. Die Außenkontaktierung 394 ist über eine Federverbindung bzw. Steckverbindung an einem Kontaktabschnitt der Anodenableitung 380 angeschlossen, die federnd auf das Kontaktelement 394 drückt. Dadurch sind sämtliche Anodenanschlüsse an den Anodenablauf 380 angeschlossen. Auf der Kathodenseite ist ein erstes Halterungselement 382" vorgesehen, das einen Randabschnitt eines Rahmens 360' hält. Der Randabschnitt umfasst eine Kathodenkontaktierung, die auf dem Randabschnitt vorgesehen ist, welche wiederum über eine federnde Steckverbindung an die elektrische Kontaktierung 392 der Halterung angeschlossen ist. Die elektrische Kontaktierung 392 ist ein Teil des Halteelements 382', das ebenfalls ein Durchgangsloch aufweist, um eine elektrische Verbindung zu der Kathodenableitung 382 vorzusehen. Dadurch können die einzelnen Zellen in die mechanischen und elektrischen Kontaktelemente 380", 390, 392, 382" eingesteckt werden. Darüber hinaus sind die Kathodenableitungen und die Anodenableitung von den Halterungselementen abnehmbar, so dass sie sich von außen auf einfache Weise anstecken lassen. Dadurch lassen sich beispielsweise Anodenableitungen und Kathodenableitungen 380, 382 austauschen, die die Art der Zellenverschaltung vorsehen.

Während in der Figur 4 die Anodenableitung und die Kathodenableitung für eine Parallelschaltung der Zellen ausgestaltet sind, können diese ebenso nichtdurchgängig sein und nur zwei Paare von Kontakten miteinander verbinden, um so eine Serienschaltung vorzusehen. Hierbei sind die Zellen abwechselnd antiparallel zueinander angeordnet, wodurch sich in üblicher Weise eine Serienschaltung ergibt.

Während die Kontaktierung an der Kathodenseite durch das Element 392 mittels einer Federung vorgesehen wird, die insbesondere auf die Randabschnitte drückt, an denen sich die Kathodenkontaktierung der Zelle befindet, dient der elektrische Kontakt 390 dazu, eine Federkraft auf eine Stirnseite des Rahmens auszuüben, um die Stirnseite der Elektrode der Anodenstruktur zu kontaktieren. Somit übt das Kontaktelement 392 eine Kraft aus, die senkrecht zur Erstreckungsebene der Anodenstruktur verläuft, wohingegen die Kontaktierung 390 eine Federkraft in Erstreckungsrichtung der Lithiumzelle erzeugt. Die Kontaktierung 390 ist insbesondere an die Art der Anodendarstellung angepasst. Wenn beispielsweise auch Außenflächen des Randes des Rahmens elektrisch leitende Flächen aufweisen, die mit der Anodenstruktur verbunden sind, so kann das elektrische Kontaktelement 390 auch mit einer Federkraft vorgesehen sein, die senkrecht zur Erstreckungsrichtung der Zelle drückt. Neben den Federverbindungen der Halterung und den Zellen kann auch eine federnde Steckverbindung zwischen Außenkontakten der Halterung 394 und der Anodenableitung bzw. Kathodenableitung vorgesehen sein, insbesondere dadurch, dass der elektrische Kontakt 394 mittels eines federnden Materials vorgesehen ist, insbesondere aus Stahlblech. Alternativ oder in Kombination hiermit können die Anoden- und Kathodenableitungen Federelemente umfassen, die ebenso eine Federkraft auf die Kontaktelemente 394 der Halterung ausüben.

Zwischen den einzelnen Zellen ist eine Trennschicht 396 vorgesehen, die aus elektrisch nicht leitendem Material ausgebildet ist. Die Trennschicht, die als Trennplatte ausgeführt sein kann, ist ferner vorzugsweise elastisch oder plastisch vorgesehen, um insbesondere Kräfte zu absorbieren und den Akkumulator intern zu stabilisieren. Ferner kann die Trennplatte einen Stoff aufweisen, der bei höheren Temperaturen austritt und Brand hemmend wirkt. Die Dicke der Trennschicht ist nicht maßstäblich zu der Dicke der Zellen dargestellt, vielmehr kann die Trennschicht deutlich dünner sein als die Zellen.

Die Figur 5a zeigt in detaillierter Darstellung eine weitere alternative Ausführungsform einer Anodenkontaktierung der Halterung des erfindungsgemäßen Lithiumakkumulators. Diese umfasst ein Halterungselement 480' mit einer ersten Ausnehmung, in der ein Rand eines Rahmens einer Zelle eingesteckt werden kann, wobei der Rand des Rahmens eine zwischenliegende Elektrodenstruktur umfasst. Das Halterungselement 480' umfasst ferner eine gegenüberliegende, weitere Ausnehmung, die eine Kontaktierung mittels einer Anodenableitung ermöglicht. Die beiden Ausnehmungen sind verbunden durch ein Durchgangsloch, durch das hindurch sich ein Metallstift erstreckt, wobei der Metallstift bei eingesteckter Lithiumzelle unmittelbar auf die zwischenliegende Elektrodenstruktur des Rahmenabschnitts stößt.

Die Figur 5b zeigt eine Kathodenschiene, die in der Kathodenableitung verwendet werden kann. Entlang einer Erstreckungsrichtung der Haupotschiene sind einzelne, federnde Kontaktelemente in U-Form aufgereiht, die senkrecht zur Erstreckungsrichtung der Hauptschiene geöffnet sind. In diese lassen sich die äußeren Rahmenabschnitte der Zellen einstecken, wodurch sich ein Kontakt zwischen der Kathodenschiene und der elektrisch leitenden Fläche ergibt, die auf dem Randbereich des Rahmens aufgebracht ist und mit der Kathodenstruktur elektrisch verbunden ist. Eine Kathodenschiene der Figur 4b kann unmittelbar an die Zellen angesteckt werden, ohne zusätzliche Halterungselemente wie sie in der Figur 4 mit den Bezugszeichen 382' und 382" dargestellt sind. Es ergibt sich dadurch eine kompaktere Struktur.

Die Figur 5c zeigt eine Ausführung einer Anodenschiene, mit der die Anoden der Zellen elektrisch kontaktiert werden können. Die Anodenschiene umfasst eine Anodenhauptschiene, von der sich in W-Form Federelemente weg erstrecken. Diese umfassen ein mittleres Element zwischen zwei äußeren Federflanken, mit dem die Stirnseite der Anode kontaktiert werden kann. Wie bei der Kathodenschiene von Figur 4b, ermöglicht die Anodenschiene der Figur 4c eine unmittelbare Kontaktierung der Lithiumzellen und deren mechanische Anordnung, so dass auf weitere Befestigungselemente verzichtet werden kann, die in der Figur 4 mit den Bezugszeichen 380', 380" dargestellt sind. Die Folge ist eine kompaktere Ausführungsform.

Eine weitere Möglichkeit sieht vor, dass bei einer doppelseitigen Lithiumzelle die einzelnen Elektroden, die zur Kontaktierung der jeweiligen Kathode dienen, über eine äußere Metallklammer miteinander verbunden werden. Befindet sich eine derartige Zelle zusammen mit der Metallklammer in der Halterung, so kann durch eine Halterung des Elements hindurch beispielsweise ein Metallstift eingebracht werden, der auf eine Seitenfläche der Klammer stößt und somit beide Kathodenkontaktierungen miteinander kontaktiert. Diese Klammer wird beispielsweise von einer metallischen Klemmschiene vorgesehen, die wiederum von einer nicht leitenden Halterungsschiene getragen wird, durch die hindurch sich Kontaktstifte zur Seitenfläche der Klemmschiene hin erstrecken.

Im Allgemeinen sind insbesondere Steckverbindungen bevorzugt, vor allem in Form von Kontaktschienen, in die die einzelnen Zellen hineingesteckt werden können. Die einzelnen Kontaktschienen sind miteinander mechanisch verbunden, um so die Halterung vorzusehen. Im Allgemeinen umfasst die Halterung einen Außenkontakt, der elektrisch mit der jeweiligen Metallschiene verbunden ist und als Klemmenanschluss für den Akkumulator dient. Neben der dargestellten mechanischen Befestigung mittels Halterungen und/oder Federkontakt können die einzelnen Zellen auch mittels einer zusätzlichen Klebeverbindung mit der Halterung des Akkumulators verbunden werden. Die Verbindung zwischen Halterung und Zelle wird insbesondere über Randabschnitte des Rahmens vorgesehen, wobei der Rahmen zum einen die Anodenstruktur umgreift und zum anderen die beiden Festelektrolytstrukturen beider Seiten trennt. Der Rahmen umschließt ferner insbesondere sämtliches Lithiummetall vollständig, so dass elementares Lithium innerhalb der Lithiumzelle durch die Innenstirnflächen des Rahmens sowie durch die Flächen der Festelektrolytstrukturen vollkommen umschlossen ist, die der Anodenstruktur zugewandt sind. Damit ist das Lithium durch die elektrisch isolierende Festelektrolytstruktur vollständig von dem Mischleiter (d. h. von dem Trägermaterial) der Kathodenstruktur isoliert sowie insbesondere von dem aktiven Material innerhalb der Kathodenstruktur. Darüber hinaus sieht der Rahmen eine seitliche Trennung für die Stirnflächen der Anodenstruktur vor, so dass auch keine Möglichkeit besteht, dass elementares Lithium mit der elektrisch leitenden Kathodenstruktur oder insbesondere mit dem aktiven Material in Verbindung kommt. Schließlich kapseln die Festelektrolytstrukturen der beiden Zellenteile sowie der Rahmen das Lithium vollständig ein und vermeiden damit den Kontakt zur Umgebung, so dass eine Explosionsgefahr grundsätzlich unterbunden ist.

## Patentansprüche

1. Lithiumzelle mit einer Kathodenstruktur aus einem Elektronen leitenden und Li-Ionen leitenden Trägermaterial, wobei die Kathodenstruktur (10) eine durchgehende Trägerschicht (12) umfasst, die eine Grundfläche (12') vorsieht, von der ausgehend sich eine Vielzahl von Stegen (14) erstreckt, welche Stegflächen (14') vorsehen, von denen ausgehend sich Tragestrukturen (16) erstrecken, welche Trageflächen vorsehen, auf denen aktives Material (18) verteilt ist.

2. Lithiumzelle nach Anspruch 1, wobei die Grundfläche (12'), die Stege (14) und die Tragestrukturen (16) stoffschlüssig unmittelbar miteinander verbunden sind und die Tragestrukturen benachbarter Stege gegenüberliegend zueinander angeordnet sind, jedoch nicht unmittelbar miteinander verbunden sind, und insbesondere die Trägerschicht einen elektrischen Kontakt (150) umfasst, der einen Kathodenanschluss der Lithiumzelle vorsieht.

3. Lithiumzelle nach Anspruch 1 oder 2, wobei die Trägerschicht (12) zusammen mit den Stegen (14) mittels Gefriergießen eines Trägermaterials ausgebildet ist und die Tragestrukturen (16) von auf den Stegflächen abgeschiedenen Nanostrukturen oder Nanodrähten vorgesehen sind, die aus dem Trägermaterial ausgebildet sind.

4. Lithiumzelle nach einem der vorangehenden Ansprüche, die ferner eine Festelektrolytstruktur (20) aus einem elektrisch isolierenden, Li-Ionen leitenden Material umfasst, auf der die durchgehende Trägerschicht angeordnet ist, wobei eine der Grundfläche (12') entgegengesetzte Seite der Trägerschicht unmittelbar auf der Festelektrolytstruktur (20) angeordnet ist, wobei die Lithiumzelle ferner eine Anodenstruktur (30) mit einer Lithiumschicht umfasst, auf der unmittelbar die Festelektrolytstruktur (20) angeordnet ist, wobei ferner vorzugsweise auf einer Vorder- und einer Rückseite der Anodenstruktur jeweils unmittelbar die Festelektrolystruktur angeordnet ist, und jeweils die Trägerschicht auf der Festelektrolystruktur angeordnet ist, wobei sich die Stege zu beiden Seiten der Anodenstruktur von der zugehörigen Trägerschicht weg erstrecken.

5. Lithiumzelle nach einem der vorangehenden Ansprüche, wobei das Trägermaterial ein Elektrodenpotential gegenüber Lithium von maximal 2,9 V oder maximal 2 V aufweist, und das insbesondere Li-Ti-Oxid oder Li₄₋ₓMgₓTi₅O₁₂, mit 0 ≤x ≤ 2 oder 0 ≤ x ≤ 1, oder Li₄₋ₓMgₓTi_{5-y}(Nb, Ta)_{y}O₁₂, mit 0 ≤ x ≤ 2 oder 0 ≤ x ≤ 1 und 0 ≤ y ≤ 0,1 oder 0 ≤ y ≤ 0,05, oder Li₂₋ₓMgₓTi_{3-y}(Nb, Ta)_{y}O₇ mit 0 ≤ x ≤ 1 oder 0 < x < 0,5 und 0 < y < 0,03 umfasst, und wobei das aktive Material Schwefel, Schwefelpartikel, Katalysatormaterial eingerichtet zur Unterstützung von Li-O-Reaktionen, α-MnO₂ oder nanokristallines α-MnO umfasst.

6. Lithiumakkumulator mit einer Vielzahl von Lithiumzellen nach einem der vorangehenden Ansprüche, wobei der Lithiumakkumulator ferner eine Halterung (380-396) umfasst, in der die Vielzahl von Lithiumzellen in Form eines Stapels angeordnet ist, wobei die Halterung ferner elektrische Kontakte (380, 382, 392, 394) umfasst, mit denen die Zellen elektrisch miteinander verbunden sind, wobei die elektrischen Kontakte vorzugsweise Steckkontakte umfassen.

7. Verfahren zur Herstellung einer Lithiumzelle, umfassend: Vorsehen einer Kathodenstruktur durch Gefriergießen eines Trägermaterials, das für Elektronen und Li-Ionen leitend ist, wobei eine durchgehende Trägerschicht (12), die eine durchgehende Grundfläche (12') vorsieht, und eine Vielzahl von Stegen (14), die sich von der Grundfläche erstrecken, mittels desselben Gefriergussschritts erzeugt werden; Vorsehen von Tragestrukturen (16), nachdem die Trägerschicht und die Vielzahl von Stegen erzeugt wurden, wobei sich die Tragestrukturen ausgehend von den Stegen erstrecken, durch Abscheiden des Trägermaterials in Form von Mikro- oder Nanostrukturen, vorzugsweise als Nanodrähte; und verteiltes Aufbringen von aktivem Material (18) auf Trageflächen, die von den erzeugten Tragestrukturen vorgesehen werden.

8. Verfahren nach Anspruch 7, ferner umfassend: Vorsehen einer Festelektrolytstruktur (20) aus einem elektrisch isolierenden, Li-Ionen leitenden Material, beispielsweise in Form einer Platte oder Schicht, wobei die Kathodenstruktur (10) unmittelbar auf die Festelektrolytstruktur (20) aufgebracht wird, indem das Trägermaterial auf die Festelektrolytstruktur (20) gefriergegossen wird, die bei dem Schritt des Gefriergießens als Gießunterlage verwendet wird.

9. Verfahren nach Anspruch 8, ferner umfassend: Vorsehen einer Anodenstruktur, und Anordnen der Anodenschicht auf einer Seite der Festelektrolytschicht, die der Seite der Kathodenstruktur entgegengesetzt ist, auf der die Kathodenstruktur aufgebracht wird, wobei die Anodenstruktur vorgesehen wird durch (i) Vorsehen einer Lithiumschicht (130), die in zwei Teilschichten ausgeführt ist, zwischen denen eine Elektrodenschicht (132) angeordnet wird, wobei die zwei Teilschichten mit der zwischenliegenden Elektrodenschicht verbunden werden; (ii) durch eine Metallschaumschicht, die mit Lithium durchsetzt ist; oder (iii) durch Ausbilden eines Zwischenraums zwischen zwei zueinander angeordneten Festelektrolytstrukturen und Einbringen von Lithium in den Zwischenraum, vorzugsweise bevor die Kathodenstrukturen auf die jeweiligen Festelektrolytstrukturen aufgebracht werden, wobei das Einbringen von Lithium in den Zwischenraum ausgeführt wird durch elektrochemisches Pumpen von Lithium in den Zwischenraum oder Gießen des Lithiums in den Zwischenraum.

10. Verfahren zur Herstellung eines Lithiumakkumulators, umfassend: das Verfahren zur Herstellung einer Lithiumzelle nach einem der Ansprüche 7-9, wobei das Verfahren zur Herstellung der Lithiumzelle ferner umfasst: Anordnen eines elektrischen Kontakts, der eine Kathodenelektrode (150) der Lithiumzelle bildet, in elektrischer Verbindung mit der Trägerschicht, vorzugsweise an einem Seitenrand der Trägerschicht, und Anordnen eines weiteren elektrischen Kontakts (132), der eine Anodenelektrode der Lithiumzelle bildet, an der Lithiumzelle, vorzugsweise an einem weiteren Seitenrand der Trägerschicht, wobei das Verfahren zur Herstellung eines Lithiumakkumulators ferner umfasst: Anordnen einer Vielzahl von Lithiumzellen in Form eines Stapels in einer Halterung (380-396), in der elektrische Kontakte vorgesehen sind, durch Einstecken der Lithiumzellen in die elektrischen Kontakte (390, 392) der Halterung, wobei die Kathodenelektrode und die Anodenelektrode mit den elektrischen Kontakten der Halterung elektrisch verbunden werden.

## Claims

1. Lithium cell having a cathode structure comprising a support material which conducts electrons and conducts lithium ions, wherein the cathode structure (10) comprises a continuous support layer (12) which provides a base surface (12') starting from which a large number of webs (14) extend, said webs providing web surfaces (14') starting from which supporting structures (16) extend, said supporting structures providing supporting surfaces on which active material (18) is distributed.

2. Lithium cell according to Claim 1, wherein the base surface (12'), the webs (14) and the supporting structures (16) are cohesively connected directly to one another, and the supporting structures of adjacent webs are arranged opposite one another, but are not connected directly to one another, and in particular the support layer comprises an electrical contact (150) which provides a cathode connection of the lithium cell.

3. Lithium cell according to Claim 1 or 2, wherein the support layer (12), together with the webs (14), is formed by means of freeze casting a support material, and the supporting structures (16) are provided by nanostructures or nanowires which are deposited on the web surfaces and are formed from the support material.

4. Lithium cell according to one of the preceding claims, which further comprises a solid electrolyte structure (20) comprising an electrically insulating material which conducts lithium ions, the continuous support layer being arranged on the said solid electrolyte structure, wherein a side of the support layer which is situated opposite the base surface (12') is arranged directly on the solid electrolyte structure (20), wherein the lithium cell further comprises an anode structure (30) with a lithium layer on which the solid electrolyte structure (20) is directly arranged, wherein the solid electrolyte structure is further preferably arranged in each case directly on a front side and a rear side of the anode structure, and the support layer is respectively arranged on the solid electrolyte structure, wherein the webs extend away from the associated support layer on both sides of the anode structure.

5. Lithium cell according to one of the preceding claims, wherein the support material has an electrode potential relative to lithium of at most 2.9 V or at most 2 V, and which in particular comprises lithium titanium oxide or Li₄₋ₓMgₓTi₅O₁₂, where 0 ≤ x ≤ 2 or 0 ≤ x ≤ 1, or Li₄₋ₓMgₓTi_{5-y}(Nb, Ta)_{y}O₁₂, where 0 ≤ x 2 or 0 ≤ x ≤ 1 and 0 ≤ y ≤ 0.1 or 0 ≤ y ≤ 0.05, or Li₂₋ₓMgₓTi_{3-y}(NB, Ta)_{y}O₇, where 0 ≤ x ≤·1 or 0 ≤ x ≤ 0.5 and 0 ≤ y ≤ 0.03, and wherein the active material comprises sulphur, sulphur particles, catalyst material designed to assist lithium/oxygen reactions, α-MnO₂ or nanocrystalline α-MnO.

6. Rechargeable lithium battery having a large number of lithium cells according to one of the preceding claims, wherein the rechargeable lithium battery further comprises a holder (380-396) in which the large number of lithium cells are arranged in the form of a stack, wherein the holder further comprises electrical contacts (380, 382, 392, 394) with which the cells are electrically connected to one another, wherein the electrical contacts preferably comprise plug contacts.

7. Method for producing a lithium cell, comprising: providing a cathode structure by freeze casting a support material which conducts electrons and lithium ions, wherein a continuous support layer (12), which provides a continuous base surface (12'), and a large number of webs (14), which extend from the base surface, are produced by means of the same freeze casting step; providing supporting structures (16) after the support layer and the large number of webs have been produced, wherein the supporting structures extend starting from the webs, by deposition of the support material in the form of micro- or nanostructures, preferably in the form of nanowires; and applying in a distributed manner active material (18) on supporting surfaces which are provided by the produced supporting structures.

8. Method according to Claim 7, further comprising: providing a solid electrolyte structure (20) comprising an electrically insulating material which conducts lithium ions, for example in the form of a plate or layer, wherein the cathode structure (10) is applied directly to the solid electrolyte structure (20) by the support material being freeze-cast on the solid electrolyte structure (20) which is used as a casting substrate in the freeze casting step.

9. Method according to Claim 8, further comprising: providing an anode structure, and arranging the anode layer on a side of the solid electrolyte layer which is situated opposite the side of the cathode structure on which the cathode structure is applied, wherein the anode structure is provided by (i) providing a lithium layer (130) which is designed in two layer elements between which an electrode layer (132) is arranged, wherein the two layer elements are connected to the intermediate electrode layer; (ii) by a metal foam layer which is pervaded by lithium; or (iii) by forming an intermediate space between two solid electrolyte structures which are arranged relative to one another, and introducing lithium into the intermediate space, preferably before the cathode structures are applied to the respective solid electrolyte structures, wherein lithium is introduced into the intermediate space by electrochemical pumping of lithium into the intermediate space or casting the lithium into the intermediate space.

10. Method for producing a rechargeable lithium battery, comprising: the method for producing a lithium cell according to one of Claims 7-9, wherein the method for producing the lithium cell further comprises: arranging an electrical contact, which forms a cathode electrode (150) of the lithium cell, in electrical connection to the support layer, preferably at a side edge of the support layer, and arranging a further electrical contact (132), which forms an anode electrode of the lithium cell, on the lithium cell, preferably at a further side edge of the support layer, wherein the method for producing a rechargeable lithium battery further comprises: arranging a large number of lithium cells in the form of a stack in a holder (380-396), in which electrical contacts are provided, by inserting lithium cells into the electrical contacts (390, 392) of the holder, wherein the cathode electrode and the anode electrode are electrically connected to the electrical contacts of the holder.

## Revendications

1. Cellule au lithium dotée d'une structure de cathode constituée d'un matériau de support conduisant les électrons et conduisant les ions Li, la structure de cathode (10) comportant une couche continue de support (12) qui présente une surface de base (12') de laquelle s'étendent plusieurs nervures (14) dotées de surfaces de nervure (14') desquelles partent des structures de support (16) qui présentent des surfaces de support sur lesquelles un matériau actif (18) est réparti.

2. Cellule au lithium selon la revendication 1, dans laquelle la surface de base (12'), les nervures (14) et les structures de support (16) sont raccordées directement les unes aux autres en correspondance de matière, les nervures voisines des structures de support étant disposées les unes en face des autres mais n'étant pas raccordées directement les unes aux autres, la couche de support comportant en particulier un contact électrique (150) qui assure le raccordement de la cathode de la cellule au lithium.

3. Cellule au lithium selon les revendications 1 ou 2, dans laquelle la couche de support (12) ainsi que les nervures (14) sont formées par coulée-solidification d'un matériau de support, les structures de support (16) étant formées par des nanostructures ou nanofils déposés sur les surfaces des nervures et constitués du matériau de support.

4. Cellule au lithium selon l'une des revendications précédentes, comportant en outre une structure (20) d'électrolyte solide constituée d'un matériau électriquement isolant et conduisant les ions lithium et sur laquelle la couche continue de support est disposée, un côté de la couche de support situé face à la surface de base (12') étant disposé directement sur la structure d'électrolyte solide (20), la cellule au lithium comportant en outre une structure d'anode (30) dotée d'une couche de lithium et sur laquelle la structure d'électrolyte solide (20) est disposée directement, la structure d'électrolyte solide étant en outre disposée directement de préférence sur le côté avant ou le côté arrière de la structure d'anode, la couche de support étant disposée sur la structure d'électrolyte solide, les nervures s'étendant vers les deux côtés de la structure d'anode en s'éloignant de la couche de support associée.

5. Cellule au lithium selon l'une des revendications précédentes, dans laquelle le matériau de support présente un potentiel d'électrode d'au plus 2,9 V ou d'au plus 2 V par rapport au lithium et comporte en particulier un oxyde de Li-Ti ou du Li₄₋ₓMgₓTi₅O₁₂ avec 0 ≤ x ≤ 2 ou 0 ≤ x ≤1, ou Li₄₋ₓMgₓTi_{5-y}(Nb, Ta)_{y}O₁₂ avec 0 ≤ x ≤ 2 ou 0 ≤ x ≤ 1 ou 0 ≤ y ≤ 0, 1 ou 0 ≤ y ≤ 0,05, ou Li₂₋ₓMgₓTi_{3-y}(Nb, Ta)_{y}O₇ avec 0 ≤ x ≤ 1 ou 0 < x < 0,5 et 0 < y < 0,03, le matériau actif comportant du soufre, des particules de soufre, un matériau catalyseur conçu pour soutenir des réactions Li-O, du α-MnO₂ ou du α-MnO nanocristallin.

6. Accumulateur au lithium doté de plusieurs cellules au lithium selon l'une des revendications précédentes, l'accumulateur au lithium comportant en outre un support (380-396) dans lequel les différentes cellules au lithium sont disposées en pile, le support comportant en outre des contacts électriques (380, 382, 392, 394) par lesquelles les cellules sont raccordées électriquement les unes aux autres, les contacts électriques comportant de préférence des contacts enfichables.

7. Procédé de fabrication d'une cellule au lithium, le procédé comportant les étapes qui consistent à :
prévoir une structure de cathode par coulée-solidification d'un matériau de support conducteur pour les électrons et les ions Li, une couche continue de support (12) qui présente une surface de base continue (12') et plusieurs nervures (14) qui s'étendent depuis la surface de base étant formées par la même opération de coulée-solidification,
prévoir des structures de support (16), suite à quoi la couche de support et les différentes nervures sont formées, les structures de support s'étendant à partir des nervures, par dépôt du matériau de support sous la forme de microstructures ou de nanostructures de préférence de nanofils et
application répartie d'un matériau actif (18) sur des surfaces de support formées par les structures de support.

8. Procédé selon la revendication 7, comportant en outre les étapes qui consistent à :
prévoir une structure d'électrolyte solide (20) en un matériau électriquement isolant mais conduisant les ions Li, par exemple sous la forme d'une plaque ou d'une couche, la structure de cathode (10) étant appliquée directement sur la structure d'électrolyte solide (20) par le fait que le matériau de support est coulé et solidifié sur la structure d'électrolyte solide (20) utilisée comme base de coulée lors de l'étape de coulée-solidification.

9. Procédé selon la revendication 8, comportant en outre les étapes qui consistent à :
prévoir une structure d'anode et disposer la couche d'anode sur un côté de la couche d'électrolyte solide opposé au côté où se trouve la structure de cathode sur lequel la structure de cathode est appliquée, la structure d'anode étant obtenue (i) en prévoyant une couche de lithium (130) réalisée en deux couches partielles entre lesquelles une couche d'électrode (132) est disposée, les deux couches partielles étant raccordées à la couche d'électrode intermédiaire, (ii) en prévoyant une couche de mousse métallique traversée par du lithium ou (iii) en formant un espace intermédiaire entre deux structures d'électrolyte solide disposées l'une face à l'autre et en apportant du lithium dans l'espace intermédiaire, de préférence avant l'application des structures de cathode sur les structures d'électrolyte solide correspondantes, l'apport de lithium dans l'espace intermédiaire étant réalisé par pompage électrochimique de lithium dans l'espace intermédiaire ou coulée du lithium dans l'espace intermédiaire.

10. Procédé de fabrication d'un accumulateur au lithium, comportant le procédé de fabrication d'une cellule au lithium selon l'une des revendications 7 à 9, le procédé de fabrication de la cellule au lithium comportant en outre les étapes qui consistent à placer un contact électrique qui forme une électrode de cathode (150) de la cellule au lithium en liaison électrique avec la couche de support, de préférence sur un bord latéral de la couche de support et placer un autre contact électrique (132) qui forme l'électrode d'anode de la cellule au lithium sur la cellule au lithium, de préférence sur un autre bord latéral de la couche de support, le procédé de fabrication d'un accumulateur au lithium comportant en outre les étapes qui consistent à placer plusieurs cellules au lithium en pile dans un support (380-396) dans lequel sont prévus des contacts électriques en insérant les cellules au lithium dans les contacts électriques (390-392) du support et à raccorder électriquement l'électrode de cathode et l'électrode d'anode aux contacts électriques du support.
